# EUROPÄISCHE PATENTANMELDUNG

(11) **EP 2 141 017 A1**
(43) Veröffentlichungstag der Anmeldung: **06.01.2010**
(21) Anmeldenummer: 09008018.5
(22) Anmeldetag: 19.06.2009
(51) Int. Cl.: B32B 37/10, B30B 5/02

(54) **Laminierpresse zum Laminieren von Werkstücken unter Druck- und Wärmeeinwirkung**

(30) Priorität: 01.07.2008 DE 202008008799 U
(71) Anmelder: Robert Bürkle GmbH, 72250 Freudenstadt (DE)
(72) Erfinder: Renz, Wolfgang, 72250 Freudenstadt (DE)
(74) Vertreter: Lemcke, Brommer & Partner

(57) **Zusammenfassung**

Die Erfindung betrifft eine Laminierpresse zum Laminieren von Werkstücken unter Druck- und Wärmeeinwirkung, wobei die Werkstücke mindestens eine durch Wärme aktivierbare Kleberschicht enthalten. Die Laminierpresse umfasst mindestens eine luftdicht schließbare, von einer unteren Kammerhälfte 7 und einer oberen Kammerhälfte 6, die relativ zueinander bewegbar sind, sowie einer dazwischen angeordneten, umlaufenden, ein- oder mehrteiligen Dichtung 1, 8 gebildeten Pressenkammer, die durch eine gasdichte flexible Membran 2 in einen zwischen der unteren Kammerhälfte 7 und der Membran 2 befindlichen Produktraum 4 sowie einen zwischen der Membran 2 und der oberen Kammerhälfte 6 befindlichen Druckraum 3 geteilt ist.

Sowohl der Produktraum 4 als auch der Druckraum 3 sind jeweils mit Druckregeleinrichtungen 9, 10 zum Evakuieren und Belüften und/oder Druckbeaufschlagen verbunden. Die untere Kammerhälfte 7 und/oder die obere Kammerhälfte 6 sind mit Wärmeeinrichtungen 11 zum Einleiten einer Prozesswärme in die Pressenkammer versehen.

Erfindungsgemäß ist an der oberen Kammerhälfte 6 ein gasdurchlässiges Anlageelement 5 für die Membran 2 angeordnet.

## Beschreibung

Die Erfindung betrifft eine Laminierpresse zum Laminieren von Werkstücken, die mindestens eine durch Wärme aktivierbare Kleberschicht enthalten, unter Druck- und Wärmeeinwirkung nach dem Oberbegriff des Anspruchs 1.

Eine solche Laminierpresse umfasst mindestens eine luftdicht schließbare Pressenkammer, die von einer unteren Kammerhälfte und einer oberen Kammerhälfte sowie einer dazwischen angeordneten, umlaufenden, ein- oder mehrteiligen Dichtung gebildet wird. Die untere Kammerhälfte und die obere Kammerhälfte sind relativ zueinander bewegbar, so dass die Pressenkammer zum Beladen und zum Entladen der zu laminierenden Werkstücke geöffnet sowie zum Laminieren der Werkstücke luftdicht geschlossen werden kann. Die Pressenkammer ist durch eine flexible, luftundurchlässige Membran in einen zwischen der unteren Kammerhälfte und der Membran befindlichen Produktraum sowie einen zwischen der Membran und der oberen Kammerhälfte befindlichen Druckraum geteilt. Sowohl der Produktraum als auch der Druckraum können evakuiert und belüftet und/oder mit Druck beaufschlagt werden; hierzu stehen sie jeweils mit Druckregeleinrichtungen in Wirkverbindung. Schließlich sind die untere Kammerhälfte und/oder die obere Kammerhälfte mit Wärmeeinrichtungen zum Einleiten einer Prozesswärme in die Pressenkammer versehen.

Das bevorzugte Anwendungsgebiet der vorliegenden Erfindung ist das Laminieren von Photovoltaik-Modulen, bei denen eine Solarzellenschicht mitsamt ihren elektrischen Kontaktierungselementen feuchtigkeitsdicht sowie wetterfest und dennoch lichtdurchlässig eingekapselt wird. Eine entsprechende Laminierpresse ist beispielsweise aus der WO 2006/128699 A2 bekannt.

Um ein Werkstück - oder meist mehrere Werkstücke gleichzeitig, der Einfachheit halber wird im Folgenden nur von einem Werkstück gesprochen - zu laminieren, wird dieses in den Produktraum der Pressenkammer verbracht und die Pressenkammer geschlossen. Zu diesem Zeitpunkt soll das Werkstück möglichst wenig erwärmt werden und insbesondere nicht mit der in der Regel warmen Membran in Berührung kommen. Denn das Erwärmen des Werkstücks auf und über die Erweichungstemperatur der darin enthaltenen Kleberschicht - oder Kleberschichten, auch hier wird nur der Klarheit halber von einer Kleberschicht gesprochen - soll unter Vakuum erfolgen, um etwaige Lufteinschlüsse oder etwaige beim Erwärmen gebildete Gase aus dem Werkstück herauszuziehen, bevor ein Härten bzw. Vernetzen des Klebers in der Kleberschicht beginnt. Gerade bei Photovoltaik-Modulen könnten Lufteinschlüsse oder Gasblasen Undichtigkeiten im fertigen Modul hervorrufen und müssen daher verhindert werden.

Um diese Randbedingungen einzuhalten, wird nach dem Schließen der Pressenkammer normalerweise zunächst der Druckraum der Pressenkammer evakuiert, um die Membran nach oben zur oberen Kammerhälfte zu ziehen. Sodann, üblicherweise mit einem gewissen Zeitversatz, wird auch der Produkt-raum evakuiert, wobei das Evakuieren beider Räume der Pressenkammer so geregelt wird, dass immer ein Differenzdruck zwischen dem Druckraum und dem Produktraum bestehen bleibt, der die Membran an der oberen Kammerhälfte hält und verhindert, dass die Membran in Kontakt mit dem Werkstück gelangt.

Wenn der Produktraum der Pressenkammer bis zu einem Solldruck evakuiert worden ist, der in der Regel unterhalb 1 mbar liegt, wird der Druckraum so weit belüftet, dass sich die Druckdifferenz zwischen dem Druckraum und dem Produktraum umkehrt und die Membran sich auf das Werkstück auflegt. Durch Regeln des Drucks im Druckraum wird der Anpressdruck der Membran eingestellt. Der durch die Membran ausgeübte Druck auf das Werkstück sorgt dann zusammen mit einer Einbringung der Prozesswärme in das Werkstück für das Erweichen bzw. Aktivieren der Kleberschicht und gegebenenfalls für deren Aushärten.

Da die Membran luftundurchlässig ist, und dies auch sein muss, um ihre Funktion übernehmen zu können, kann es nun vorkommen, dass sich beim Anlegen der Membran an die obere Kammerhälfte, während des oben beschriebenen Evakuiervorgangs, Lufteinschlüsse bilden. Insbesondere dann, wenn sich der Druck im Produktraum dem Solldruck nähert, wird die Druckdifferenz zwischen dem Produktraum und dem Druckraum der Pressenkammer sehr klein, so dass die Kraft, die die Membran gegen die obere Kammerhälfte drückt, ebenfalls nur noch klein ist. Dies führt dann gelegentlich dazu, dass sich die Membran von der oberen Kammerhälfte partiell ablöst und die eingeschlossenen Luftpolster in den ansonsten evakuierten Druckraum sowie in die Druckregeleinrichtung zum Evakuieren des Druckraums gelangen. Hierdurch wird eine exakte und stetige Druckregelung der beiden Räume verhindert, und es können sogar undefinierte Druckzustände entstehen, durch die die Membran eine flatternde Bewegung durchführt oder gegebenenfalls sogar in unerwünschten Kontakt mit dem Werkstück kommt.

Ausgehend von diesem Stand der Technik liegt der vorliegenden Erfindung daher die Aufgabe zugrunde, eine Laminierpresse der eingangs genannten Art hinsichtlich der geschilderten Problematik zu verbessern.

Gelöst ist diese Aufgabe durch eine Laminierpresse mit den Merkmalen des Anspruchs 1. Bevorzugte Ausgestaltungen und Weiterbildungen der erfindungsgemäßen Laminierpresse sind in den Ansprüchen 2 bis 8 niedergelegt.

Der Kern der vorliegenden Erfindung besteht also darin, dass an der oberen Kammerhälfte ein gasdurchlässiges Anlageelement für die Membran angeordnet ist, welches insbesondere ein an der Unterseite der oberen Kammerhälfte angebrachtes Vliespolster, beispielsweise aus Filz oder einem Gewebe sein kann. Das Gewebe kann ein Stoffgewebe, eine luftdurchlässige Kunststoffmatte oder ein Metalldrahtgebilde sein; wichtig ist jeweils nur, dass sich hierdurch eine gasdurchlässige Anlagefläche für die Membran ergibt, also eine Schicht zwischen der Membran und der oberen Kammerhälfte, die luftdurchströmt werden kann.

Hierdurch wird gewährleistet, dass die Membran sich an keiner Stelle direkt an die obere Kammerhälfte anlegen kann, so dass sich zwischen der Membran und der oberen Kammerhälfte keine Lufteinschlüsse mehr bilden können. Diese werden vielmehr durch das gasdurchlässige Anlageelement hindurch abgesaugt.

Die vorliegende Erfindung verhindert also nicht nur die eingangs beschriebenen Nachteile und Probleme einer Laminierpresse der vorliegenden Art, sondern ermöglicht auch eine Druckführung beim Evakuieren des Druckraums und des Produktraums der Pressenkammer, bei der der Differenzdruck von Anfang an nur sehr gering sein muss, so dass der Evakuierungsprozess insgesamt schneller ablaufen kann als bei den bisher bekannten Laminierpressen. Aufgrund des jederzeit definierten Druckverlaufs im Druckraum muss der dort herrschende Druck nicht geregelt werden. Es genügt vielmehr, den Druck im Druckraum während des Evakuierens laufend zu messen und lediglich den Druck im Produktraum so zu regeln, dass eine voreingestellte Druckdifferenz zwischen dem Produktraum und dem Druckraum aufrechterhalten bleibt.

Da der Druckraum aufgrund der erfindungsgemäß vorhandenen gasdurchlässigen Schicht an der oberen Kammerhälfte vollständig evakuiert werden kann, ergeben sich auch beim Belüften des Druckraums definierte Zustände - beim Ablösen der Membran von der oberen Kammerhälfte werden keine Lufteinschlüsse frei -, so dass das Anlegen der Membran an das Werkstück mit vorteilhaft genauen und geringen Druckdifferenzen, beispielsweise unterhalb 50 mbar, bewirkt werden kann. Solch geringe Druckdifferenzen resultieren in entsprechend niedrigen Anpressdrücken der Membran, was für empfindliche, zu laminierende Werkstücke sehr vorteilhaft sein kann.

Die Dichtung zwischen der oberen Kammerhälfte und der unteren Kammerhälfte, die Teil der Begrenzung der Pressenkammer ist, kann einen Dichtrahmen umfassen, der insbesondere an der oberen Kammerhälfte befestigt ist und mit umlaufenden weichelastischen Dichtelementen versehen ist, die die Luftdichtheit zwischen dem Pressenrahmen und den oberen und unteren Kammerhälften gewährleistet. Soweit die oberen und unteren Kammerhälften flach ausgebildet sind, definiert die Dicke des Dichtrahmens das Volumen der Pressenkammer.

Die Membran kann hierbei in den Dichtrahmen eingespannt sein, oder aber sie kann über den Dichtrahmen gespannt werden, so dass sie beim Schließen der Laminierpresse zwischen den Dichtrahmen und die untere Kammerhälfte oder zwischen den Dichtrahmen und die obere Kammerhälfte geklemmt wird.

Zum Einbringen der für den Laminiervorgang notwendigen Prozesswärme können die untere Kammerhälfte und/oder die obere Kammerhälfte mit einer Heizplatte versehen sein, oder aber selbst als Heizplatte ausgebildet sein. Das Beheizen der Heizplatte kann hierbei mit Thermoöl erfolgen, was nebenbei den Vorteil bietet, die Heizplatten auch als Kühlplatten zum Abkühlen der Pressenkammer verwenden zu können.

Zum Zwecke eines leichten Ein- und Ausförderns der Werkstücke in die und aus der Pressenkammer kann ein durchlaufendes Förderband vorgesehen sein, auf dem aufliegend die Werkstücke in den Produktraum der Pressenkammer verbracht werden.

Um zu verhindern, dass beim Laminiervorgang etwa aus dem Werkstück austretender Klebstoff an die Membran gelangt und deren Funktion in nachfolgenden Laminierprozessen beeinträchtigt, kann eine Abdeckfolie vorgesehen sein, die vorzugsweise mit den Werkstücken in die Pressenkammer eingefördert und aus der Pressenkammer ausgefördert wird, wobei sie in der Pressenkammer zwischen dem Werkstück und der Membran zu liegen kommt.

Besondere Vorteile ergeben sich hierbei, wenn eine luftundurchlässige, großflächige Abdeckfolie verwendet wird, die die Funktion der Membran übernehmen kann. Denn dann kann die Membran komplett weggelassen werden, was die Herstellung der Laminierpresse vereinfacht und insbesondere deren Wartungskosten sowie deren Betriebssicherheit erhöht; denn Produktionsstillstände aufgrund eines notwendig werdenden Membranwechsels gehören dann der Vergangenheit an.

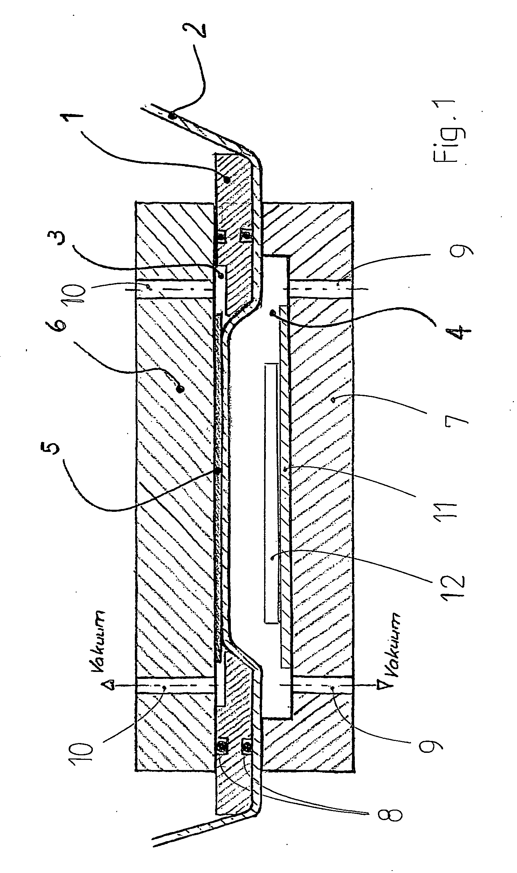

Ein Ausführungsbeispiel für die vorliegende Erfindung wird im Folgenden anhand der beigefügten Zeichnung näher beschrieben und erläutert.

Die einzige Zeichnung zeigt in einer schematischen seitlichen Schnittdarstellung eine Pressenkammer einer erfindungsgemäßen Laminierpresse. Diese wird gebildet durch eine untere Kammerhälfte 7, eine obere Kammerhälfte 6, die von der unteren Kammerhälfte 7 weggehoben und auf diese abgesenkt werden kann, sowie einen an der oberen Kammerhälfte 6 angebrachten Dichtrahmen 1. Über den Dichtrahmen ist eine Membran 2 gespannt, die die Pressenkammer in einen unterhalb der Membran 2 befindlichen Produktraum 4 und einen oberhalb der Membran 2 befindlichen Druckraum 3 teilt.

Der Dichtrahmen 1 ist mit nach oben wirkenden und nach unten wirkenden, jeweils umlaufenden elastischen Dichtelementen 8 versehen und bildet zusammen mit diesen die Dichtung der Pressenkammer.

In der unteren Kammerhälfte 7 sind symbolisch zwei Kanäle 9 dargestellt, die zu einer (nicht dargestellten) Druckregeleinrichtung, nämlich einer Pumpe und einem Belüftungsventil, führen und zum Evakuieren bzw. Belüften des Produktraums 4 dienen. In entsprechender Weise befinden sich in der oberen Kammerhälfte 6 zwei Kanäle 10 zum Absaugen und Belüften sowie gegebenenfalls Druckbeaufschlagen des Druckraums 3.

An der oberen Kammerhälfte 6 ist ein gasdurchlässiges Vliespolster 5 befestigt, welches rundum bis unter eine Aussparung des Dichtrahmens 1 reicht, so dass die Membran 2 an keiner Stelle direkten Kontakt mit der oberen Kammerhälfte 6 bekommen kann.

Die in der Zeichnung dargestellte Laminierpresse arbeitet nach dem eingangs beschriebenen Verfahren. Nach dem Einbringen eines beispielhaft einzeln dargestellten Werkstücks 12 in den Produktraum 4 der Pressenkammer wird die obere Kammerhälfte 6 auf die untere Kammerhälfte 7 abgesenkt, bis sich der Dichtrahmen 1 mit aufgespannter Membran 2 luftdicht auf die untere Kammerhälfte 7 auflegt und somit die Pressenkammer luftdicht verschließt. Über die Kanäle 10 wird der Druckraum 3 der Pressenkammer evakuiert, wodurch sich die Membran 2, wie in der Zeichnung gezeigt, an das Vliespolster 5 der oberen Kammerhälfte 6 anlegt. Praktisch gleichzeitig kann bereits der Produktraum 4 über die Kanäle 9 evakuiert werden, um etwaige Lufteinschlüsse aus dem Werkstück 12 herauszuziehen, bevor der Klebstoff in der Kleberschicht aktiviert wird. Hierbei wird der Druck im Produktraum 4 so geregelt, dass er immer etwas höher liegt, als der Druck im Druckraum 3. Hierdurch wird gewährleistet, dass die Membran 2 ständig an der oberen Kammerhälfte 6 bzw. am Vliespolster 5 anliegt und nicht in Kontakt mit dem Werkstück 12 kommt. Hierfür reicht auch ein bislang nicht möglich gewesener kleiner Differenzdruck zwischen dem Druckraum 3 und dem Produktraum 4.

Da das Vliespolster 5 erfindungsgemäß gasdurchlässig ist, können sich oberhalb der Membran 2 keinerlei Lufteinschlüsse bilden, so dass der Druckraum 3 vollständig evakuiert werden kann. Nachdem dann auch der Produktraum 4 auf den Sollwert, der in der Regel unter 1 mbar liegt, evakuiert worden ist, wird der Druckraum 3 über die Kanäle 10 so weit belüftet, bis sich ein Differenzdruck zwischen dem Druckraum 3 und dem Produktraum 4 ergibt, der einen Sollwert eines Anpressdrucks der Membran 2 an das Werkstück 12 erzeugt. Durch diese Umkehrung der Druckdifferenz zwischen dem Druckraum 3 und dem Produktraum 4 löst sich die Membran 2 vom Vliespolster 5, und zwar in definierter Weise, da keine Lufteinschlüsse vorhanden sind, und senkt sich auf das Werkstück 12 ab, wo sie durch die Druckdifferenz zwischen dem Druckraum 3 und dem Produktraum 4 auf das Werkstück 12 aufgepresst wird. Das Werkstück 12 wird hierbei gegen eine an der unteren Kammerhälfte 7 angebrachte Heizplatte 11 gepresst, so dass nicht nur der für den Laminiervorgang erforderliche Anpressdruck, sondern auch die notwendige Prozesswärme in das Werkstück 12 eingebracht wird.

Aufgrund des zuvor vollständigen Evakuierens des Druckraums 3 kann die Membran 2 beim Belüften des Druckraums 3 in definierter Weise auf das Werkstück 12 abgesenkt werden, wobei das Belüften des Druckraums 3 insbesondere zu einem nur sehr geringen Maß, beispielsweise bis zu einem Druck von 50 mbar, erfolgen kann, um möglichst geringe Anpressdrücke der Membran 2 an das Werkstück 12 zu generieren. Empfindliche Werkstücke, wie beispielsweise Module aus Dünnschichtsolarzellen, die zwischen zwei Glasplatten laminiert werden, laufen so nicht Gefahr, beim Laminieren zerstört oder beschädigt zu werden. Selbstverständlich ist es zum Erzeugen besonders hoher Anpressdrücke aber auch möglich, den Druckraum 3 vollständig zu belüften und darüber hinaus durch Einleiten von Druckgas mit zusätzlichem Druck zu beaufschlagen.

## Patentansprüche

1. Laminierpresse zum Laminieren von Werkstücken, die mindestens eine durch Wärme aktivierbare Kleberschicht enthalten, unter Druck- und Wärmeeinwirkung, umfassend
mindestens eine luftdicht schließbare, von einer unteren Kammerhälfte (7) und einer oberen Kammerhälfte (6), die relativ zueinander bewegbar sind, sowie einer dazwischen angeordneten, umlaufenden, ein- oder mehrteiligen Dichtung (1, 8) gebildeten Pressenkammer, die durch eine gasdichte flexible Membran (2) in einen zwischen der unteren Kammerhälfte (7) und der Membran (2) befindlichen Produktraum (4) sowie einen zwischen der Membran (2) und der oberen Kammerhälfte (6) befindlichen Druckraum (3) geteilt ist,
wobei sowohl der Produktraum (4) als auch der Druckraum (3) jeweils mit Druckregeleinrichtungen (9, 10) zum Evakuieren und Belüften und/oder Druckbeaufschlagen verbunden sind,
und wobei die untere Kammerhälfte (7) und/oder die obere Kammerhälfte (6) mit Wärmeeinrichtungen (11) zum Einleiten einer Prozesswärme in die Pressenkammer versehen sind,
**dadurch gekennzeichnet,**
**dass** an der oberen Kammerhälfte (6) ein gasdurchlässiges Anlageelement (5) für die Membran (2) angeordnet ist.

2. Laminierpresse nach Anspruch 1,
**dadurch gekennzeichnet,**
**dass** das Anlageelement (5) ein an der Unterseite der oberen Kammerhälfte (6) angebrachtes Vliespolster ist.

3. Laminierpresse nach Anspruch 2,
**dadurch gekennzeichnet,**
**dass** das Vliespolster aus Filz oder einem Gewebe besteht.

4. Laminierpresse nach mindestens einem der Ansprüche 1 bis 3,
**dadurch gekennzeichnet,**
**dass** die Dichtung der Pressenkammer einen Dichtrahmen (1) umfasst, über den oder in den die Membran (2) gespannt ist.

5. Laminierpresse nach mindestens einem der Ansprüche 1 bis 4,
**dadurch gekennzeichnet,**
**dass** die untere Kammerhälfte (7) und/oder die obere Kammerhälfte (6) als Heizplatte (11) ausgebildet oder mit einer solchen versehen sind.

6. Laminierpresse nach mindestens einem der Ansprüche 1 bis 5,
**dadurch gekennzeichnet,**
**dass** ein durch den Produktraum (4) laufendes Förderband zum Ein- und Ausfördern der Werkstücke (12) in die und aus der Pressenkammer vorgesehen ist.

7. Laminierpresse nach mindestens einem der Ansprüche 1 bis 6,
**dadurch gekennzeichnet,**
**dass** eine separat in die Pressenkammer eingebrachte, durch die Pressenkammer geführte oder mit den Werkstücken (12) in die Pressenkammer eingeförderte und aus der Pressenkammer ausgeförderte, zwischen dem Werkstück (12) und der oberen Kammerhälfte (6) zu liegen kommende Abdeckfolie vorgesehen ist.

8. Laminierpresse nach Anspruch 7,
**dadurch gekennzeichnet,**
**dass** die flexible Membran (2) die Abdeckfolie ist.
